(19) Europäisches Patentamt
European Patent Office
Office européen des brevets

(11) **EP 4 282 225 B1**

(12) **EUROPÄISCHE PATENTSCHRIFT**

(45) Veröffentlichungstag und Bekanntmachung des Hinweises auf die Patenterteilung:
**29.01.2025 Patentblatt 2025/05**

(21) Anmeldenummer: **22712562.2**

(22) Anmeldetag: **09.03.2022**

(51) Internationale Patentklassifikation (IPC):
*H05B 3/34* *(2006.01)*   *H05B 3/12* *(2006.01)*
*H05B 3/16* *(2006.01)*

(52) Gemeinsame Patentklassifikation (CPC):
**H05B 3/342; H05B 3/12; H05B 3/16;**
H05B 2203/003; H05B 2203/016; H05B 2203/017;
H05B 2203/02; H05B 2203/026; H05B 2203/032;
Y02B 30/00

(86) Internationale Anmeldenummer:
**PCT/EP2022/056076**

(87) Internationale Veröffentlichungsnummer:
**WO 2022/194648 (22.09.2022 Gazette 2022/38)**

(54) **FLÄCHENHEIZELEMENT UND VERFAHREN ZU DESSEN HERSTELLUNG**

PLANAR HEATING ELEMENT AND MANUFACTURE METHOD THEREOF

ELEMENT DE CHAUFFAGE DE SURFACE ET PROCEDE POUR SA FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.03.2021 DE 102021106217**

(43) Veröffentlichungstag der Anmeldung:
**29.11.2023 Patentblatt 2023/48**

(73) Patentinhaber: **Infinite Flex GmbH**
**61440 Oberursel (DE)**

(72) Erfinder:
• **KORNHERR, Andreas**
**1100 Wien (AT)**
• **HÜTTENBRENNER, Severin**
**3340 Waidhofen a. d. Ybbs (AT)**
• **BISGES, Michael**
**93049 Regensburg (DE)**
• **HENZE, Enno Klaus**
**86438 Kissing (DE)**

(74) Vertreter: **Kohlmann, Kai**
**Donatusstraße 1**
**52078 Aachen (DE)**

(56) Entgegenhaltungen:
WO-A1-2009/034037   CN-A- 108 915 184
DE-A1- 102012 224 514   US-A- 4 203 198
US-A- 5 302 807

**Beschreibung**

Die Erfindung betrifft ein als Widerstandsheizung ausgeführtes Flächenheizelement umfassend ein offenporiges, diffusionsoffenes textiles Flächengebilde. Das textile Flächengebilde besteht aus einem elektrisch nichtleitenden Material.

Ein Heizleiter einer Widerstandsheizung wandelt elektrische Energie in thermische Energie. Selbst schlecht leitende Metalle erfordern eine große erforderliche Länge des Heizleiters, um mit gängigen Spannungen nicht zu überhitzen, daher legt man die Heizleiter häufig in Mäanderform. Die Wärme wird erzeugt, indem der Heizleiter von Strom durchflossen wird und sich durch die Joulesche Wärme erhitzt. Die Wärmeleistung ist nach dem ohmschen Gesetz abhängig vom Widerstandswert, spezifischen Widerstand des Materials, dessen Querschnitt und Länge und dem elektrischen Strom und damit der an den Heizleiter angelegten Spannung.

Flächenheizelemente kommen zur Beheizung von Fußböden, Wänden und Decken von Gebäuden sowie zur Beheizung von Bauteilen aller Art zum Einsatz.

Die WO 2009/034037 A1 offenbart ein elektrisch leitfähiges, flexibles Flächengebilde, umfassend eine elektrisch leitfähige Beschichtung auf einem flexiblen, elektrisch nicht leitfähigen flächigen Träger und wenigstens zwei Elektroden zum Einspeisen von elektrischem Strom. Die elektrisch leitfähige Beschichtung besteht im Wesentlichen aus einem polymeren Bindemittel und einem elektrisch leitfähigen Pulver, welches den elektrischen Strom leitet. Der flexible Träger kann eine Textilie sein.

Aus DE 199 39 175 A1 ist eine Heizfolie bekannt, bei der eine rein metallische, leitfähige Beschichtung durch Galvanisieren, Sputtern oder Aufdampfen auf einem Trägertextil, insbesondere jedoch einer Trägerfolie aufgebracht wird.

Bei der Anwendung von Flächenheizelementen in Bauwerken ist eine diffusionsoffene Struktur von Vorteil, um Feuchtigkeit aus der Bausubstanz an die Umgebung abzuführen. Dadurch werden einer Schimmelbildung und anderen feuchtigkeitsbedingten Schäden entgegengewirkt. Die DE 10 2012 224 514 A1 offenbart ein elektrisch leitfähig beschichtetes Faser-Gittergewebe, das Gitteröffnungen hat, wobei die einzelnen Fasermaterialien des Fasergittergewebes mit einer elektrisch leitfähigen Schicht ummantelt sind. Die elektrisch leitfähige Schicht umfasst ein im trockenen Zustand elastisches Bindemittel und ein elektrisch leitfähiges Material, wobei das leitfähige Material aus Kohlenstoffpartikeln, Partikeln leitfähiger Polymere oder Gemischen davon besteht. Das Faser-Gittergewebe wird zur Armierung und gleichzeitigen Beheizung von Wand-, Decken- und Bodenflächen in Gebäuden verwendet. Das Faser-Gittergewebe kann auch in eine Anputzschicht eingebettet werden.

Die CN 108 915 184 B offenbart eine Heiztapete, die zwischen einer oberen und unteren Isolierschicht eine Heizschichtgruppe aufweist. Die Heizschichtgruppe besteht aus einer Kohlenstoff-Nanoröhrenverbundschicht sowie einem ersten Leitstreifen und einem zweiten Leitstreifen. Die Kohlenstoff-Nanoröhren sind für die elektrothermische Umwandlungseffizienz und die Emittierung von Ferninfrarotstrahlen verantwortlich, wenn sie über die Leitstreifen mit Energie versorgt werden.

Ausgehend von der DE 10 2012 224 514 A1 liegt der Erfindung die Aufgabe zu Grunde, ein diffusionsoffenes Flächenheizelement zur Beheizung von Wand-, Decken- und Bodenflächen in Gebäuden sowie von Bauteilen mit hohem Wirkungsgrad und reduziertem Wärmedurchgang bei zugleich reduzierter Brandlast zu schaffen, welches sich zudem vorteilhaft als Komponente in Verbundwerkstoffe und daraus hergestellte Bauteile integrieren lässt.

Schließlich soll ein produktionstechnisch vorteilhaftes und kostengünstiges Verfahren zur Herstellung des Flächenheizelementes angegeben werden.

Diese Aufgabe wird durch die Merkmale der unabhängigen Ansprüche 1, 12 und 15 gelöst. Vorteilhafte Ausgestaltungen der Erfindung ergeben sich aus den Merkmalen der Unteransprüche.

Das Flächenheizelement soll trotz der offenporigen, diffusionsoffenen Struktur zur Abfuhr von Feuchtigkeit einen effektiven Heizbetrieb gewährleisten. Hierbei spielt neben der effektiven Umwandlung des elektrischen Stroms in Wärme auch ein reduzierter Wärmedurchgang, d.h. eine Dämmwirkung des Flächenheizelements eine wesentliche Rolle.

Die Dämmwirkung basiert auf den Reflexionseigenschaften des als Folie ausgebildeten Heizleiters für Infrarotstrahlung, der stoffschlüssig mit dem Heizbereich des textilen Flächengebildes verbunden ist. Die Infrarotstrahlung wird über das gesamte Energiespektrum, d.h. über den gesamten Wellenlängenbereich von etwa 780 nm bis 1 mm reflektiert.

Das die Infrarotstrahlung reflektierende Material des mindestens einen Heizleiters ist eine Aluminium Legierung mit einem Massenanteil des Aluminiums von mindestens 98%, wobei der mindestens eine Heizleiter zwischen 70 - 95 % der Heizoberfläche bedeckt. Dieser Bedeckungsgrad ist ausreichend, um die Dämmwirkung zu erzielen, wobei die Abfuhr von Feuchtigkeit durch die offenporigen, diffusionsoffen verbleibenden Bereiche des textilen Flächengebildes erhalten bleibt.

Der überwiegend aus Aluminium bestehende mindestens eine Heizleiter weist zudem eine hohe Korrosionsbeständigkeit auf und erlaubt die Verarbeitung als dünne Folie bei zugleich hohem elektrischen Widerstand. Das Flächenheizelement mit hoch korrosionsbeständigem Heizleiter ist für eine Integration in Verbundwerkstoffe für den Einsatz in Gebäuden besonders geeignet. Schließlich hat sich in Versuchen überraschend herausgestellt, dass der hohe Masseanteil des Aluminiums in der Aluminiumlegierung bewirkt, dass mehr als 50 % der dem Heizleiter zugeführten elektrischen Energie als Infrarotstrahlung abgegeben wird.

Bei einer bevorzugten Aluminium Legierung EN-AW 8079 wird durch Zusatz von Eisen und Silizium eine höhere Zugfestigkeit bei zugleich guter Umformbarkeit erreicht. Diese Legierung ist für die Ausbildung des mindestens einen Heizleiters als Folie mit geringer Dicke in einem Bereich von 1 μm - 50 μm daher besonders geeignet.

Die Folie aus einer Aluminium-Legierung zeigt das Verhalten eines PTC-Widerstands mit einem positiven Temperaturkoeffizienten und leitet bei tiefen Temperaturen den elektrischen Strom besser als bei hohen Temperaturen; sie wirkt damit einer Überhitzung des Flächenheizelementes entgegen.

Der mindestens eine Heizleiter wird vorzugsweise mit einer konstanten Niederspannung im Bereich zwischen 12-50 V betrieben. Grundsätzlich ist auch ein Betrieb mit höheren Spannungen, beispielsweise einer Netzspannung von 230 V möglich. Höhere Spannungen sind bei Anwendungen in Gebäuden auf mit dem Flächenheizelement ausgerüsteten Bauplatten jedoch kritisch, da beispielsweise das Einbringen von Bohrlöchern oder Nägeln in die Bauplatte zu einem elektrischen Schlag führen können.

Die Wärmleistung P des Heizleiters

$$P = U^2/R$$

mit

$$R = \rho * l/A$$

ist abhängig von dem elektrischen Widerstand $R$ des Heizleiters und der an dessen Kontakten angelegten Betriebsspannung $U$, wobei der elektrische Widerstand $R$ von dem spezifischen Widerstand $\rho$ der Aluminiumlegierung, dem Querschnitt $A$ und der Länge $l$ des Heizleiters abhängt.

Bei konstanter Betriebsspannung $U$ und gegebenem Querschnitt $A$ des als Folie ausgebildeten Heizleiters bewirkt ein mit steigender Temperatur des Heizleiters ansteigender spezifischen Widerstand $\rho$ eine Reduktion der Wärmeleistung und der Heizleiter kühlt sich wieder ab.

Der Überhitzung des mindestens einen als Folie ausgebildeten Heizleiters wird außerdem dadurch entgegengewirkt, dass er nicht geradlinig, sondern vorzugsweise in einer Mäanderform verläuft, um dessen Länge $l$ zu erhöhen. Bei konstanter Betriebsspannung $U$ und gegebenem Querschnitt A des Heizleiters mit seinem spezifischen Widerstand $\rho$ bewirkt eine größere Länge des Heizleiters eine Reduktion der Wärmeleistung.

Eine Integration des Flächenheizelements in einen Verbundwerkstoff wird dadurch unterstützt, dass das offenporige, diffusionsoffene textile Flächengebilde zugleich die Matrix ist, in die eine matrixbildende Komponente des Verbundwerkstoffs eindringen kann. Die matrixbildende Komponente besteht beispielsweise aus mindestens einem Stoff der nachfolgenden Gruppe: Gips, Zement, Lehm oder wässrige Dispersionsklebstoffe. Das Flächenheizelement kann beispielsweise in einen auf eine Wand aufgebrachten Gipsputz als matrixbildende Komponente vor dem Aushärten eingebettet werden. Alternativ lassen sich aus einem das Flächenheizelement als eingebettete Komponente aufweisenden Verbundwerkstoff beheizbare Bauteile herstellen, beispielsweise Bauplatten oder Bodenbelage sowie Formteile von technischen Anlagen, wie z.B. Flügel von Windkraftanlagen.

Das Flächenheizelement kann ganz oder teilweise in die matrixbildende Komponente eingebettet sein. Bei teilweiser Einbettung ist lediglich das textile Flächengebilde in die matrixbildende Komponente eingebettet, während bei vollständiger Einbettung sowohl das textile Flächengebilde als auch der mindestens eine Heizleiter eingebettet sind. Die offenporige, diffusionsoffene Struktur des textilen Flächengebildes wird durch die matrixbildende Komponente in dem Verbundwerkstoff wirksam verankert; zugleich trägt die matrixbildende Komponente maßgeblich zur Feuchtigkeitsabfuhr aus dem Verbundwerkstoff bei. Schließlich bewirkt eine vollständige Einbettung eine höhere Temperaturwechselbeständigkeit des Kleberverbundes zwischen dem Heizleiter und dem textilen Flächengebilde.

Die Brandlast des Flächenheizelementes ist durch den hohen Anteil der Mineralfasern in dem textilen Flächengebilde in Verbindung mit einem kohlenstofffreien Heizleiter aus einer Aluminium-Legierung gering. Eine Verarbeitung des erfindungsgemäßen Flächenheizelementes in Verbundwerkstoffen und daraus hergestellten Bauteilen in Gebäuden ist daher gemäß Brandschutzbestimmungen vorgesehen.

Der mindestens eine als Folie ausgebildete Heizleiter weist eine geringe Dicke im Bereich von 1-50 μm, vorzugsweise von 3-10 μm auf. Die geringe Dicke erlaubt eine problemlose Integration des Flächenheizelementes in Verbundwerkstoffe sowie daraus hergestellte Bauteile. Außerdem gewährleistet die geringe Dicke des Heizleiters aus einer Aluminium-Legierung einen ausreichend hohen elektrischen Widerstand. Die Breite des Heizleiters beträgt mindestens das 20-fache der Dicke. Die Dicke des Heizleiters ist vorzugsweise über die gesamte Heizfolie konstant. Die Breite kann indes abhängig vom verfügbaren Platz variieren. Typische Breiten des Heizleiters liegen im Bereich von 1 bis 5mm.

Das diffusionsoffene textile Flächengebilde ist ein zweidimensionales Textilerzeugnis; hierzu gehören beispielsweise Gewebe, Maschenware, Filze, Vliesstoffe und Geflechte. Diffusionsoffen bezeichnet die Durchlässigkeit des textilen Flächengebildes für Wasserdampf aufgrund seiner Offenporigkeit. Je höher die Wasserdampfdurchlässigkeit, umso besser kann Feuchtigkeit durch das textile Flächengewebe hindurchtreten.

Das textile Flächengebilde ist besonders bevorzugt ein Vliesstoff, der aufgrund der Eigenschaftsvielfalt, der Vielzahl der nutzbaren Faserstoffe für die Mineralfasern und der Herstellungsverfahren eine gezielte Anpassung an ein breites Spektrum von Anwendungen des Flächenheizelementes mit unterschiedlichen Anforderungen ermöglicht.

Das textile Flächengebilde weist einen Masseanteil von mindestens 70 Gew.- % Mineralfasern auf. Mineralfasern sind anorganische Naturfasern oder Kunstfasern. Kunstfasern, auch als Chemiefasern bezeichnet, sind künstlich nach chemischtechnischen Verfahren hergestellte anorganische oder organische Fasern. Naturfasern sind anorganische oder organische Fasern mit natürlichem Ursprung, die nicht künstlich hergestellt wurden. Künstliche Mineralfasern (KMF) werden oft aus Silikatschmelzen gewonnen und bestehen z.B. aus Glas, Keramik oder Quarz als Faserstoff.

Die mindestens 70 Gew.- % Mineralfasern des textilen Flächengebildes bestehen vorzugsweise aus E-, C-, R-, S-, M-, D-, AR-, ECR-Glas, Basalt oder Keramik als Faserstoff oder Mischungen der vorgenannten Faserstoffe. Nachfolgend werden die verschiedenen Faserstoffe näher erläutert:

**E-Glas:** Faser aus Aluminiumborsilikat-Glas mit weniger als 2 % Alkalioxiden, die als Standardfaser für elektrische Anwendungen zum Einsatz gelangt; sie ist daher für das Flächenheizelement gut geeignet.

**C-Glas (C = Chemical):** Faser mit erhöhter Chemikalienbeständigkeit, die abhängig von den Einsatzbedingungen des Flächenheizelementes von Bedeutung ist.

**R-Glas (R = Résistance):** Faser aus Aluminiumsilikat-Glas mit Zusätzen von Calcium- und Magnesiumoxid für hohe mechanische Anforderungen auch bei hohen Temperaturen.

**S-Glas (S = Strength):** Faser aus Aluminiumsilikat-Glas mit Zusätzen von Magnesiumoxid ebenfalls für hohe mechanische Anforderungen auch bei hohen Temperaturen.

**M-Glas:** Faser aus berryliumhaltigen Glas mit erhöhter Steifigkeit (E-Modul) für höchste mechanische Anforderungen.

**D-Glas (D = Dielectric):** Faser mit niedrigem dielektrischen Verlustfaktor.

**AR-Glas (AR = Alkaline Resistant):** Mit Zirconium(IV)-oxid angereicherte Faser für eine Anwendung in Beton, die gegenüber einer basischen Umgebung weitgehend resistent ist.

**ECR-Glas (E-Glass Corrosion Resistant):** E-Glas-Faser mit besonders hoher Korrosionsbeständigkeit.

Der Rest des textilen Flächengebildes, maximal jedoch 30 Gew.-%, enthalten anorganische oder organische Naturfasern und/oder anorganische oder organische Kunstfasern und/oder Bindemittel, z.B. Acrylate oder Styrolbutadiene.

Sofern der Rest der Fasern organische Kunstfasern umfasst, handelt es sich insbesondere um Polymerfasern mit einer hohen Temperaturbeständigkeit oberhalb von 100 °C. Geeignete Polymerfasern sind beispielsweise Polyester-, Polyamid- oder Polyimid-Fasern. Die Dauerwärmebeständigkeit von Polyamidfasern liegt bei etwa 120 °C, von Polyesterfasern bei etwa 180°C und Polyimidfasern bei etwa 300 °C.

Der aus den vorgenannten Fasern hergestellte Vliesstoff weist vorzugsweise eine Dicke von 100-600 $\mu$m und/oder ein Flächengewicht von 20 bis 120 g/qm auf. Die Mineralfasern weisen vorzugsweise einen Durchmesser von 4-20 $\mu$m und/oder eine Länge von 4-30 mm auf.

Wenn das textile Flächengebilde flexibel ist, kann das Flächenheizelement auf einer nicht ebenen Oberflächen von Gebäuden und Bauteilen angeordnet bzw. in nicht ebene Bauteile eingebettet werden; außerdem kann ein Kontaktbereich des Flächenheizelementes, z.B. an einer Kante einer ebenen Bauplatte, abgewinkelt werden, um dessen Zugänglichkeit zu verbessern.

Die stoffschlüssige Verbindung zwischen dem mindestens einen Heizleiter und dem Heizbereich des textilen Flächengebildes wird mittels eines Klebstoffs hergestellt. Der Klebstoff ist vorzugsweise ein wasserbasierter Dispersionsklebstoff. Wasserbasierte Dispersionsklebstoffe eignen sich besonders gut für die erforderliche großflächige Klebung der den Heizleiter bildenden Folie auf dem textilen Flächengebilde.

Insbesondere kommt ein Nanokomposit-Klebstoff auf Basis einer Polymerdispersion zum Einsatz, bei dem durch den gezielten Einsatz von oberflächenmodifizierten, silikatischen Nanopartikeln und den Einbau thermisch stabiler, organischer Bestandteile eine hohe Flexibilität, thermische Stabilität und hohe Brandfestigkeit erreicht wird.

Die Benetzung der Fasern mit dem Klebstoff erfolgt ohne die Poren des textilen Flächengebildes zu verschließen, insbesondere durch Aufwalzen oder Aufsprühen des Klebstoffs. Sollte dennoch Klebstoff in die Poren des textilen Flächengebildes eindringen, verdampft der Klebstoff beim Laserstrukturieren des Heizleiters aus einer unstrukturierten Folie, die aus der Aluminiumlegierung besteht.

Um die Haftfähigkeit der elektrischen Kontakte auf dem im Wesentlichen aus Aluminium bestehenden Heizleiter zu verbessern, kann die Oberflächenaktivierung der Heizleiteroberfläche und der Metallisierungsprozess zur Ausbildung der elektrischen Kontakte im Wege der Plasmametallisierung vorteilhaft in einem Schritt durchgeführt werden. Die Kontakte bestehen beispielsweise aus Kupfer.

Zum Schutz der Heizleiter und/oder zur Verbesserung der optischen Erscheinung des Flächenheizelementes kann dieses oberhalb der Heizleiter mit einem diffusionsoffenen textilen Flächengebilde kaschiert sein.

Eine bestmögliche Ausnutzung der Fläche des Flächenheizelementes wird dadurch erreicht, dass der Heizbereich unter Verzicht auf ungenutzte Randbereiche des textilen Flächengebildes der Oberfläche der Ober- bzw. Unterseite des textilen Flächengebildes entspricht.

Die Herstellung eines erfindungsmäßen Flächenheizelements durch ein Verfahren mit den Merkmalen des Anspruchs 16 ist kostengünstig und produktionstechnisch vorteilhaft. Die Ausgangsmaterialien für die Herstellung können zeitlich und räumlich unabhängig voneinander hergestellt und im Bedarfsfall gelagert werden. Im Einzelnen handelt es sich um folgende Ausgangsmaterialien:

- Offenporige, diffusionsoffene textile Flächengebilde mit einem Masseanteil von mindestens 70 Gew.- % Mineralfasern.

- Unstrukturierte Folie aus einer Aluminium-Legierung mit einem Masseanteil des Aluminium von mindestens 98 Gew.-%.

- Klebstoff.

In einem ersten Schritt wird die unstrukturierte, vorzugsweise einteilige Folie aus der Aluminium-Legierung flächendeckend mit dem Heizbereich auf der Ober- oder Unterseite des textilen Flächengebildes mittels eines Klebstoffs verbunden.

In einem zweiten Schritt erfolgt das Strukturieren des mindestens einen Heizleiters durch teilweises Abtragen der unstrukturierten Folie mittels Laserstrahlung derart, dass nach dem Strukturieren der mindestens eine Heizleiter zwischen 70 - 95 % des Heizbereichs abdeckt, wobei das textile Flächengebilde aufgrund einer gegenüber der Folie höheren Transparenz für die Laserstrahlung nicht abgetragen wird. Für diesen selektiven Laserstrukturierungsprozess sind die Wellenlänge und die Leistung der auftreffenden Laserstrahlung, die Aluminiumlegierung sowie der Faserstoff des textilen Flächengebildes aufeinander abzustimmen.

Schließlich wird der Heizleiter mit elektrischen Kontakten versehen. Dies geschieht vorzugsweise dadurch, dass die Kontakte im Wege der Plasma-Metallisierung auf dem Heizleiter abgeschieden werden.

Nachfolgend wird die Erfindung anhand eines Ausführungsbeispiels näher erläutert. Es zeigen

**Figur 1**   eine Aufsicht auf ein erfindungsgemäßes Flächenheizelement,

**Figur 2**   ein textiles Flächengebilde mit Heizleiter im Teilschnitt,

**Figur 3**   das textiles Flächengebilde nach Figur 2 als teilweise eingebettete Komponente eines Verbundwerkstoffs und

**Figur 4**   das textile Flächengebilde nach Figur 2 als vollständig eingebettete Komponente eines Verbundwerkstoffs.

Das Flächenheizelement (1) umfasst als wesentliche Komponenten ein offenporiges, diffusionsoffenes textiles Flächengebilde (2) mit einer Oberseite (2.1) und einer Unterseite (2.2), drei als Folie ausgebildete Heizleiter (3) sowie eine stoffschlüssige Verbindung mittels eines Klebstoffs (4) zwischen jedem Heizleiter (3) und dem textilen Flächengebilde (2). Im dargestellten Ausführungsbeispiel ist jeder Heizleiter (3) auf der Oberseite (2.1) des textilen Flächengebildes (2) stoffschlüssig mit einem von den nicht genutzten Rändern (2.3) abgegrenzten Heizbereich (2.4) verbunden, wobei die Heizleiter (3) mehr als 70% des Heizbereichs (2.4) bedeckt.

Durch die nicht durch Heizleiter (3) abgedeckten Zwischenräume (2.5) kann Feuchtigkeit hindurch diffundieren. Der Bedeckungsgrad von mindestens 70% des Heizbereichs (2.4) ist jedoch hinreichend groß, dass beispielsweise von dem Flächenheizelement (1) in einen Raum abgestrahlte Infrarotstrahlung in großem Umfang durch die als Folie ausgebildeten Heizleiter (3) reflektiert wird.

Die Folie besteht aus einer Aluminiumlegierung EN-AW 8079 und weist eine geringe Dicke in einem Bereich zwischen 3 bis 10 $\mu$m auf. Bei dem Klebstoff (4) handelt es sich um einen wasserbasierten Dispersionsklebstoff.

Auf den Kontaktbereichen (3.1) der Heizleiter (3) sind im Wege der Plasmametallisierung abgeschiedene Kupferkontakte (5.1, 5.2) angeordnet, die über teilweise dargestellte Kabel (6) mit einer nicht dargestellten Niederspannungs-Quelle verbunden sind. Zwischen den Kontaktbereichen (3.1) verlaufen die Heizleiter (3) mäanderförmig, um einer Überhitzung der Heizleiter (3) entgegenzuwirken.

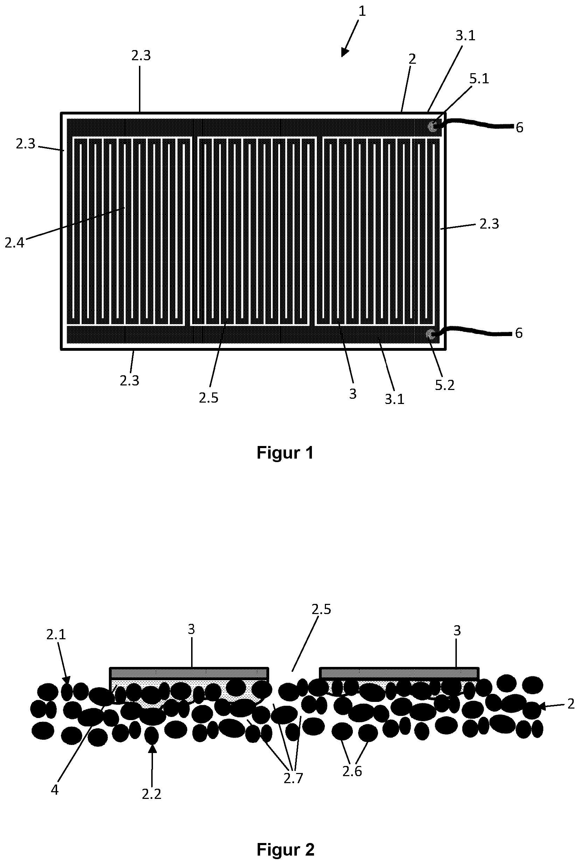

Das in Figur 2 dargestellte diffusionsoffene textile Flächengebilde (2) ist ein Vliesstoff, dessen Fasern (2.6) einen Masseanteil von mindestens 70 Gewichtsprozent Mineralfasern enthalten. Aufgrund seiner Offenporigkeit (2.7) ist das textile Flächengebilde (2) diffusionsoffen. Diffusionsoffen bezeichnet die Wasserdampfdurchlässigkeit zwischen der Ober- und Unterseite (2.1, 2.2) des textilen Flächengebildes (2). Bei den Mineralfasern handelt es sich um Glasfasern, die aufgrund Ihrer Verfügbarkeit am Markt und der geringen Brandlast gut geeignet sind. Der Rest des textilen Flächengebildes (2) enthält organische Kunstfasern mit einer Temperaturbeständigkeit oberhalb von 100° Celsius und chemische Bindemittel. Diese Fasern tragen zur Flexibilität und Stabilität des textilen Flächengebildes (2) bei. Ihr Massenanteil beträgt zusammen mit dem chemischen Bindemittel jedoch maximal 30 Gewichtsprozent des textilen Flächengebildes (2).

Das erfindungsgemäße Flächenheizelement (1) wird auf Wänden von Gebäuden oder Bauteilen aufgebracht, beispielsweise in dem die Unterseite (2.2) des textilen Flächengebildes (2) mit der Oberfläche verklebt wird.

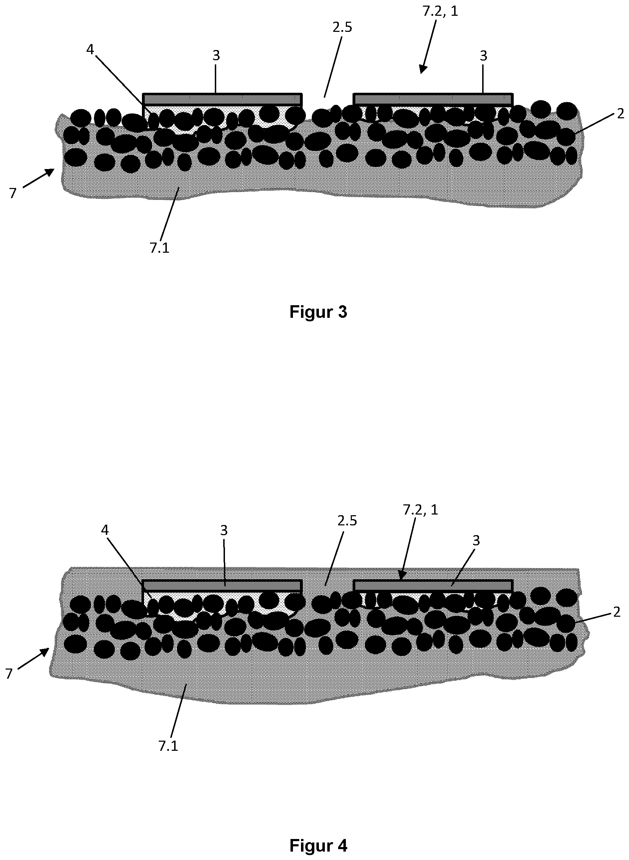

Besonders bevorzugt wird das erfindungsgemäße Flächenheizelement (1) jedoch als Komponente (7.2) eines Verbundwerkstoffs (7) verarbeitet, wie dies in Figuren 3 und 4 dargestellt ist. Der Verbundwerkstoff (7) weist eine matrixbildende Komponente (7.1), beispielsweise Gips auf, in die das Flächenheizelement (1) mit seinem textilen Flächengebilde (2) als weitere Komponente (7.2) eingebettet ist.

Die Verankerung des Flächenheizelements (1) in dem Verbundwerkstoff wird durch das offenporige textile Flächengebilde (2) als Matrix unterstützt, in die die matrixbildende Komponente (7.1) des Verbundwerkstoffs (7) eindringt. Aus den Figuren 3 und 4 ist deutlich erkennbar, dass die Komponente (7.1) die Poren des textilen Flächengebildes (2) füllt.

In dem Ausführungsbeispiel nach Figur 3 ist das Flächenheizelement (1) teilweise in die matrixbildende Komponente (7.1) eingebettet. Bei teilweiser Einbettung ist lediglich das textile Flächengebilde (2) in die matrixbildende Komponente (7.1) eingebettet, während der Heizleiter (3) an der Oberfläche des Verbundwerkstoffs (7) liegt.

Figur 4 zeigt ein Ausführungsbeispiel, bei dem das Flächenheizelement (1) vollständig in die matrixbildende Komponente (7.1) eingebettet ist. Bei vollständiger Einbettung sind sowohl das textile Flächengebilde (2) als auch der Heizleiter (3) vollständig eingebettet.

Das Flächenheizelement (1) wird in beiden Fällen durch die in das textile Flächengebilde (2) eindringende matrixbildende Komponente (7.1) in dem Verbundwerkstoff (7) gut verankert. Zugleich trägt die matrixbildende Komponente (7.1) zur Feuchtigkeitsabfuhr aus dem Verbundwerkstoff (7) bei. Im Falle der vollständigen Einbettung des Flächenheizelementes (1) wirkt die höhere Temperaturwechselbeständigkeit des Klebeverbundes zwischen den Heizleiter (3) und dem textilen Flächengebilde (2) einem Ablösen des Heizleiters (3) von dem textilen Flächengebilde (2) entgegen.

Die maxtrixbildende Komponente (7.1) ist beispielsweise eine im pastösen Zustand zuvor auf eine Gebäudeoberfläche aufgetragene Putzschicht aus Gips, in die das erfindungsgemäße Flächenheizelement (1) eingebettet wird. Alternativ kann aus dem Verbundwerkstoff (7) ein Formteil, beispielsweise eine Gips-Bauplatte hergestellt und in Gebäuden verarbeitet werden.

Die Herstellung des erfindungsgemäßen Flächenheizelementes (1) umfasst die folgenden Schritte: Zunächst wird das textile Flächengebilde (2), eine umstrukturierte Folie aus der Aluminiumlegierung und der Klebstoff (4) bereitgestellt.

Die unstrukturierte Folie aus Aluminiumlegierung zur Ausbildung der Heizleiter (3) ist in etwa flächengleich mit dem Heizbereich (2.4). Die unstrukturierte Folie wird mittels des Klebstoffs (4) stoffschlüssig mit der Oberseite (2.1) des textilen Flächengebildes (2) verbunden. Hierzu wird der Klebstoff auf den Heizbereich (2.4) ausgesprüht oder aufgerollt.

Nach dem Fügen der unstrukturierten Folie und dem textilen Flächengebilde (2) werden die Heizleiter (3) strukturiert, indem die unstrukturierte Folie zur Ausbildung der Zwischenräume (2.5) mittels Laserstrahlung teilweise abgetragen wird. Als Laser kommt beispielsweise ein Faserlaser zum Einsatz. Für diesen selektiven Laserstrukturierungsprozess ist die Wellenlänge der Laserstrahlung des Lasers und die Leistung der auftreffenden Laserstrahlung auf die Aluminiumlegierung sowie dem Faserstoff derart abzustimmen, dass lediglich die Folie in den Zwischenräumen (2.5) abgetragen wird, während das textile Flächengebilde (2) aufgrund der höheren Transparenz für die Laserstrahlung nicht abgetragen wird. Sollte Klebstoff (4) beim Auftragen in die Poren des textilen Flächengebildes (2) eingedrungen sein, verdampft dieser in den Zwischenräumen (2.5) durch die auftreffende Laserstrahlung. Das textile Flächengebilde (2) bleibt diffusionsoffen.

In einem weiteren Verfahrensschritt werden die beiden Kontakte (5.1, 5.2) aus Kupfer in einem Arbeitsgang im Wege der Plasmametallisierung auf den Kontaktbereichen (3.1) abgeschieden.

**Bezugszeichenliste**

| Nr. | Bezeichnung |
|-----|-------------|
| 1. | Flächenheizelement |
| 2. | Textiles Flächengebilde |
| 2.1 | Oberseite |
| 2.2 | Unterseite |
| 2.3 | Ränder |
| 2.4 | Heizbereich |
| 2.5 | Zwischenräume |
| 2.6 | Fasern |
| 2.7 | Offenporigkeit |
| 3. | Heizleiter |
| 3.1 | Kontaktbereich |
| 4. | Klebstoff |
| 5.1 | Kontakt |
| 5.2 | Kontakt |
| 6. | Kabel |
| 7. | Verbundwerkstoff |
| 7.1 | Matrixbildende Komponente |
| 7.2 | Weitere Komponente |

**Patentansprüche**

**1.** Flächenheizelement eingerichtet zur Anwendung in Bauwerken, umfassend

- ein offenporiges, diffusionsoffenes textiles Flächengebilde (2) mit einem Masseanteil von mindestens 70 Gew.- % Mineralfasern,

- einen Heizbereich (2.4) auf einer Oberseite (2.1) oder einer Unterseite (2.2) des textilen Flächengebildes (2), wobei der Heizbereich (2.4) der Oberfläche der Ober- bzw. Unterseite (2.1,2.2) des textilen Flächengebildes (2) entspricht,

- mindestens einen als Folie ausgebildeten Heizleiter (3), wobei die Folie aus einer Aluminium-Legierung mit einem Masseanteil des Aluminiums von mindestens 98 Gew.-% besteht und

- eine stoffschlüssige Verbindung mittels eines Klebstoffs (4) zwischen dem mindestens einen Heizleiter (3) und dem Heizbereich (2.4) des textilen Flächengebildes (2), wobei der mindestens eine Heizleiter (3) zwischen 70 - 95 % des Heizbereichs (2.4) bedeckt.

2. Flächenheizelement nach Anspruch 1, **dadurch gekennzeichnet, dass** die Folie eine Dicke in einem Bereich von 1 μm - 50 μm aufweist.

3. Flächenheizelement nach Anspruch 1 oder 2, **dadurch gekennzeichnet, dass** das textile Flächengebilde (2) flexibel ist.

4. Flächenheizelement nach einem der Ansprüche 1 bis 3, **dadurch gekennzeichnet, dass** das textile Flächengebilde (2) ein Vliesstoff ist.

5. Flächenheizelement nach einem der Ansprüche 1 bis 4, **dadurch gekennzeichnet, dass** die mindestens 70 Gew.- % Mineralfasern aus E-, C-, R-, S-, M-, D-, AR-, ECR-Glas, Basalt oder Keramik als Faserstoff oder Mischungen der vorgenannten Faserstoffe bestehen.

6. Flächenheizelement nach einem der Ansprüche 1 bis 5, **dadurch gekennzeichnet, dass** der Rest des textilen Flächengebildes (2) Polymerfasern mit einer Temperaturbeständigkeit oberhalb von 100 °C und /oder Naturfasern und/oder Bindemittel enthält.

7. Flächenheizelement nach einem der Ansprüche 1 bis 6, **dadurch gekennzeichnet, dass** die Mineralfasern vorzugsweise einen Durchmesser von 4-20 μm und/oder eine Länge von 4-30 mm aufweisen.

8. Flächenheizelement nach einem der Ansprüche 1 bis 7, **dadurch gekennzeichnet, dass** das textile Flächengebilde (2) eine Dicke von 100-600 μm und/oder ein Flächengewicht von 20 bis 120 g/qm aufweist.

9. Flächenheizelement nach einem der Ansprüche 1 bis 8 **dadurch gekennzeichnet, dass** der Klebstoff (4) ein wasserbasierter Dispersionsklebstoff ist.

10. Flächenheizelement nach einem der Ansprüche 1 bis 9, **dadurch gekennzeichnet, dass** der mindestens eine Heizleiter (3) im Wege der Plasmametallisierung auf dem Heizleiter abgeschiedene Kontakte (5.1,5.2) aufweist.

11. Flächenheizelement nach einem der Ansprüche 1 bis 10, **dadurch gekennzeichnet, dass** das Flächenheizelement (1) oberhalb der Heizleiter (3) mit einem diffusionsoffenen Flächengebilde kaschiert ist.

12. Verbundwerkstoff, **dadurch gekennzeichnet, dass** das Flächenheizelement (1) nach einem oder mehreren der Ansprüche 1 - 11 eine Komponente (7.2) des Verbundwerkstoffs (7) ist.

13. Verbundwerkstoff nach Anspruch 12, **dadurch gekennzeichnet, dass** der Verbundwerkstoff (7) eine matrixbildende Komponente (7.1) aufweist, in die das Flächenheizelement (1) ganz oder teilweise eingebettet ist.

14. Verbundwerkstoff nach Anspruch 13, **dadurch gekennzeichnet, dass** die matrixbildende Komponente (7.1) aus mindestens einem Stoff der nachfolgenden Gruppe besteht: Gips, Zement, Lehm, wässrige Dispersionsklebstoffe.

15. Verfahren zum Herstellen eines Flächenheizelements (1) eingerichtet zur Anwendung in Bauwerken, nach einem der Ansprüche 1 bis 11, umfassend die Schritte

- Bereitstellen eines offenporigen, diffusionsoffenes textiles Flächengebilde (2) mit einem Masseanteil von mindestens 70 Gew.- % Mineralfasern,
- stoffschlüssiges Verbinden einer unstrukturierten Folie aus einer Aluminium-Legierung mit einem Masseanteil des Aluminium von mindestens 98 Gew.-% mit einem Heizbereich (2.4) des textilen Flächengebildes (2) mittels eines Klebstoffs (4),
- Strukturieren des mindestens einen Heizleiters (3) durch teilweises Abtragen der unstrukturierten Folie mittels Laserstrahlung derart, dass nach dem Strukturieren der mindestens eine Heizleiter (3) zwischen 70 - 95 % des Heizbereichs (2.4) bedeckt, wobei das textile Flächengebilde (2) aufgrund einer gegenüber der Folie höheren Transparenz für die Laserstrahlung nicht abgetragen wird.

16. Verfahren nach Anspruch 15, **dadurch gekenn-**

**zeichnet, dass** der Schritt des stoffschlüssigen Verbindens einen Klebstoffauftrag auf den Fasern (2.6) des textilen Flächengebildes (2) umfasst, ohne dessen Offenporigkeit zu beeinträchtigen, wobei die die Benetzung der Fasern mit dem Klebstoff durch Aufwalzen oder Aufsprühen des Klebstoffs erfolgt.

**Claims**

1. Surface heating element, adapted for use in buildings comprising

    - an open-pored, diffusion-open textile surface structure (2) with a mass fraction of at least 70 wt. % mineral fibres,
    - a heating area (2.4) on an upper side (2.1) or a lower side (2.2) of the textile surface structure (2), wherein the heating area (2.4) corresponds to the surface of the upper and/or lower side (2.1, 2.2) of the textile surface structure (2),
    - at least one heating conductor (3) configured as a foil, wherein the foil consists of an aluminium alloy with a mass fraction of aluminium of at least 98 wt. %, and
    - a firmly bonded connection by means of an adhesive (4) between the at least one heating conductor (3) and the heating area (2.4) of the textile surface structure (2), wherein the at least one heating conductor (3) covers between 70 - 95% of the heating area (2.4).

2. Surface heating element according to Claim 1, **characterized in that** the foil has a thickness in a range of 1 um - 50 $\mu$m.

3. Surface heating element according to Claim 1 or 2, **characterized in that** the textile surface structure (2) is flexible.

4. Surface heating element according to one of Claims 1 to 3, **characterized in that** the textile surface structure (2) is a nonwoven fabric.

5. Surface heating element according to one of Claims 1 to 4, **characterized in that** the at least 70 wt. % mineral fibres consist of E, C, R, S, M, D, AR, ECR glass, basalt or ceramic as fibrous material or mixtures of the aforesaid fibrous materials.

6. Surface heating element according to one of Claims 1 to 5, **characterized in that** the remainder of the textile surface structure (2) contains polymer fibres with a temperature resistance greater than 100 °C and/or natural fibres and/or binders.

7. Surface heating element according to one of Claims 1 to 6, **characterized in that** the mineral fibres preferably have a diameter of 4-20 um and/or a length of 4-30 mm.

8. Surface heating element according to one of Claims 1 to 7, **characterized in that** the textile surface structure (2) has a thickness of 100-600 um and/or a surface weight of 20 to 120 g/m$^2$.

9. Surface heating element according to one of Claims 1 to 8, **characterized in that** the adhesive (4) is a water-based dispersion adhesive.

10. Surface heating element according to one of Claims 1 to 9, **characterized in that** the at least one heating conductor (3) has contacts (5.1, 5.2) deposited on the heating conductor by way of plasma metallization.

11. Surface heating element according to one of Claims 1 to 10, **characterized in that** the surface heating element (1) is laminated with a diffusion-open surface structure above the heating conductor (3).

12. Composite material, **characterized in that** the surface heating element (1) according to one or more of claims 1 - 11 is a component (7.2) of the composite material (7) .

13. Composite material according to Claim 12, **characterized in that** the composite material (7) has a matrix-forming component (7.1) in which the surface heating element (1) is completely or partially embedded.

14. Composite material according to Claim 13, **characterized in that** the matrix-forming component (7.1) consists of at least one substance from the following group: gypsum, cement, clay, aqueous dispersion adhesives.

15. Method for producing a surface heating element (1) adapted for use in buildings according to one of claims 1 to 11, comprising the steps

    - providing an open-pored, diffusion-open textile surface structure (2) with a mass fraction of at least 70 wt.% mineral fibres,
    - firmly bonded connection of an unstructured foil made of an aluminium alloy with a mass fraction of aluminium of at least 98 wt.% to a heating area (2.4) of the textile surface structure (2) by means of an adhesive (4),
    - structuring the at least one heating conductor (3) by partially removing the unstructured foil by means of laser radiation such that after structuring the at least one heating conductor (3) covers between 70 - 95% of the heating area (2.4), wherein the textile surface structure (2) is not removed due to a higher transparency for the laser radiation compared to the foil.

16. Method according to Claim 15, **characterized in that** the step of firmly bonded connection comprises applying adhesive to the fibres (2.6) of the textile surface structure (2) without impairing its open porosity, wherein the wetting of the fibres with the adhesive is accomplished by rolling-on or spraying-on the adhesive.

**Revendications**

1. Élément chauffant planaire, configuré pour être utilisé dans des bâtiments, comprenant

   - une structure textile (2) planaire, ouverte à la diffusion, à pores ouverts, avec une proportion massique d'au moins 70 % en poids de fibres minérales,
   - une zone chauffante (2.4) sur une face supérieure (2.1) ou une face inférieure (2.2) de la structure textile (2) planaire, la zone chauffante (2.4) correspondant à la surface de la face supérieure ou inférieure (2.1, 2.2) de la structure textile (2) planaire,
   - au moins un conducteur chauffant (3) conçu sous la forme d'un film, le film étant constitué d'un alliage d'aluminium avec une proportion massique de l'aluminium d'au moins 98 % en poids et
   - un assemblage par conjugaison de matières au moyen d'un agent adhésif (4) entre l'au moins un conducteur chauffant (3) et la zone chauffante (2.4) de la structure textile (2) planaire, l'au moins un conducteur chauffant (3) recouvrant entre 70 et 95 % de la zone chauffante (2.4).

2. Élément chauffant planaire selon la revendication 1, **caractérisé en ce que** le film présente une épaisseur dans un ordre de 1 $\mu$m à 50 $\mu$m.

3. Élément chauffant planaire selon la revendication 1 ou 2, **caractérisé en ce que** la structure textile (2) planaire est souple.

4. Élément chauffant planaire selon l'une quelconque des revendications 1 à 3, **caractérisé en ce que** la structure textile (2) planaire est un non-tissé.

5. Élément chauffant planaire selon l'une quelconque des revendications 1 à 4, **caractérisé en ce que** les moins 70 % en poids de fibres minérales sont constitués de verre E, de verre C, de verre R, de verre S, de verre M, de verre D, de verre AR, de verre ECR, de basalte ou de céramique en tant que matière fibreuse ou de mélanges des matières fibreuses précédemment citées.

6. Élément chauffant planaire selon l'une quelconque des revendications 1 à 5, **caractérisé en ce que** le reste de la structure textile (2) planaire contient des fibres polymères, faisant preuve d'une résistance aux températures de plus de 100 °C et / ou des fibres naturelles et / ou des agents liants.

7. Élément chauffant planaire selon l'une quelconque des revendications 1 à 6, **caractérisé en ce que** les fibres minérales présentent de préférence un diamètre de 4 à 20 $\mu$m et / ou une longueur de 4 à 30 mm.

8. Élément chauffant planaire selon l'une quelconque des revendications 1 à 7, **caractérisé en ce que** la structure textile (2) planaire présente une épaisseur de 100 à 600 $\mu$m et / ou un grammage de 20 à 120 g/m$^2$.

9. Élément chauffant planaire selon l'une quelconque des revendications 1 à 8, **caractérisé en ce que** l'agent adhésif (4) est un agent adhésif à dispersion sur base aqueuse.

10. Élément chauffant planaire selon l'une quelconque des revendications 1 à 9, **caractérisé en ce que** l'au moins un conducteur chauffant (3) comporte des contacts (5.1, 5.2) déposés par voie de métallisation au plasma sur le conducteur chauffant.

11. Élément chauffant planaire selon l'une quelconque des revendications 1 à 10, **caractérisé en ce que** l'élément chauffant planaire (1) est dissimulé au-dessus du conducteur chauffant (3) avec une structure planaire ouverte à la diffusion.

12. Matériau composite, **caractérisé en ce que** l'élément chauffant planaire (1) selon l'une quelconque ou plusieurs des revendications 1 à 11 est un composant (7.2) du matériau composite (7).

13. Matériau composite selon la revendication 12, **caractérisé en ce que** le matériau composite (7) comporte un composant (7.1) formant une matrice, dans lequel l'élément chauffant planaire (1) est totalement ou partiellement incorporé.

14. Matériau composite selon la revendication 13, **caractérisé en ce que** le composant (7.1) formant une matrice est constitué d'au moins une matière du groupe suivant : le plâtre, le ciment, l'argile, les agents adhésifs aqueux à dispersion.

15. Procédé, destiné à fabriquer un élément chauffant planaire (1) configuré pour être utilisé dans des bâtiments selon l'une quelconque des revendications 1 à 11, comprenant les étapes consistant à

- mettre à disposition une structure textile (2) planaire, ouverte à la diffusion, à pores ouverts, avec une proportion massique d'au moins 70 % en poids de fibres minérales,
- assembler par conjugaison de matières un film non structuré en un alliage d'aluminium avec une proportion massique de l'aluminium d'au moins 98 % en poids avec une zone chauffante (2.4) de la structure textile (2) planaire au moyen d'un agent adhésif (4),
- structurer l'au moins un conducteur chauffant (3) par enlèvement partiel du film non structuré au moyen d'un faisceau laser, de telle sorte qu'après la structuration, l'au moins un conducteur chauffant (3) recouvre entre 70 et 95 % de la zone chauffante (2.4), du fait d'une transparence plus accrue au faisceau laser par rapport au film, la structure textile (2) planaire n'étant pas enlevée.

16. Procédé selon la revendication 15, **caractérisé en ce que** l'étape de l'assemblage par conjugaison de matières comprend une application d'agent adhésif sur les fibres (2.6) de la structure textile (2) planaire sans porter atteinte à sa porosité ouverte, le mouillage des fibres avec l'agent adhésif s'effectuant par application au rouleau ou par vaporisation.

Figur 1

Figur 2

**Figur 3**

**Figur 4**

**IN DER BESCHREIBUNG AUFGEFÜHRTE DOKUMENTE**

**In der Beschreibung aufgeführte Patentdokumente**

- WO 2009034037 A1
- DE 19939175 A1
- DE 102012224514 A1
- CN 108915184 B